# EUROPÄISCHE PATENTSCHRIFT

(11) **EP 3 318 123 B1**
(45) Veröffentlichungstag und Bekanntmachung des Hinweises auf die Patenterteilung: **06.05.2020**
(21) Anmeldenummer: 17001418.7
(22) Anmeldetag: 21.08.2017
(51) Int. Cl.: A01K 7/00, A01K 39/02

(54) **TIERTRÄNKE UND WASSERAUFFANGSCHALE FÜR EINE TIERTRÄNKE**
ANIMAL DRINKING TROUGH AND WATER COLLECTING PAN FOR AN ANIMAL DRINKING TROUGH
ABREUVOIR POUR ANIMAUX ET RÉSERVOIR COLLECTEUR POUR ABREUVOIR POUR ANIMAUX

(30) Priorität: 02.11.2016 DE 202016006727 U
(43) Veröffentlichungstag der Anmeldung: 09.05.2018
(73) Patentinhaber: Barnstorfer Kunststofftechnik GmbH & Co. KG, 49406 Barnstorf (DE)
(72) Erfinder: Schumacher, Egon, 49406 Barnstorf (DE)
(74) Vertreter: Möller, Friedrich

(56) Entgegenhaltungen:
- EP-A1- 1 862 068
- EP-A1- 2 116 131
- EP-A2- 0 184 400
- DE-A1- 2 120 760
- DE-U1-202014 008 421
- FR-A1- 2 265 271

## Beschreibung

Die Erfindung betrifft eine Wasserauffangschale für eine Tiertränke gemäß dem Oberbegriff des Anspruchs 1 und eine Tiertränke mit mindestens einer Wasserauffangschale gemäß dem Oberbegriff des Anspruchs 15.

Tiertränken für Schnabeltiere, insbesondere Geflügel wie Hühner, Puten, Enten, Küken oder dergleichen, verfügen über Wasserauffangschalen. Die Wasserauffangschalen sind üblicherweise Tränkeventilen zugeordnet, die mit einer vorzugsweise strangartigen Wasserversorgungsleitung verbunden sind.

Die Tiere können selbsttätig die Tränkeventile derart betätigen, dass sie Wasser abgeben. Mindestens ein Teil dieses Wassers sammelt sich in Schalenkörpern der Wasserauffangschalen. Aus den Schalenkörpern entnehmen die Tiere das benötigte Wasser. Einen Teil ihres Wasserbedarfs können die Tiere auch dadurch decken, dass sie das aus dem jeweiligen Tränkeventil austretende Wasser direkt mit ihren Schnäbeln auffangen. Beim Wasser kann es sich um Leitungswasser, aber auch Leitungswasser mit Zusätzen, beispielsweise Medikamenten, handeln. Wenn im Folgenden nur von "Wasser" die Rede ist, schließt das Wasser mit Zusätzen ein.

Aus der DE 21 20 760 A1, der EP 2 116 131 A1, der EP 0 184 400 A2 und der FR 2 265 271 A1 sind Wasserauffangschalen bekannt, bei denen mindestens die Schalenkörper aus Kunststoff gebildet sind. Vor allem ausgewachsene Tiere können den Kunststoff mindestens der Schalenkörper der Wasserauffangschalen beeinträchtigen, indem sie mit ihren Schnäbeln auf die innenseitigen Bodenflächen der Schalenkörper einpicken. Das führt mit der Zeit zu Löchern im Bereich der tiefsten Stelle des Schalenkörpers.

Aus der DE 20 2014 008 421 U1 ist eine Wasserauffangschale aus Kunststoff für eine Tiertränke bekannt, die über einen Schalenkörper mit einer Vertiefung verfügt. Ein unterer Bereich der Vertiefung kann mit einem Metalleinsatz zur Verstärkung der Vertiefung der Wasserauffangschale versehen sein.

Aus der EP 1 862 068 A1 ist eine Tiertränke mit einer eine Vertiefung aufweisenden Wasserauffangschale aus Kunststoff bekannt. In die Innenseite der Vertiefung ist ein Einsatz aus rostfreiem Stahl eingesetzt.

Der Erfindung liegt die Aufgabe zugrunde, eine Wasserauffangschale und eine Tiertränke mit mindestens einer solchen Wasserauffangschale zu schaffen, deren Schalenkörper von den Tieren auch beim Aufnehmen restlichen Wassers nicht durchgepickt werden können, zumindest aber widerstandsfähiger gegen ein solches Durchpicken sind.

Eine Wasserauffangschale zur Lösung der vorstehend genannten Aufgabe weißt die Merkmale des Anspruchs 1 auf. Demnach ist der Einsatz aus Stahl, rostfreiem Stahl, Aluminium, glasfaserverstärktem Kunststoff oder Keramik gebildet. Außerdem ist dem Schalenkörper dort, wo sich restliches Wasser sammelt, der Einsatz zugeordnet, der gestuft bzw. abgestuft ist. Dadurch bildet sich im Einsatz eine Vertiefung zur Aufnahme des restlichen Wassers, das sich noch im Schalenkörper der Wasserauffangschale befindet. Die Tiere picken dann zum Aufnehmen des restlichen Wassers aus der Wasserauffangschale auf den Einsatz. Das jeweilige Material des Einsatzes ist äußerst widerstandsfähig gegen Abrieb oder sonstige Beeinträchtigungen durch die Schnäbel der Tiere, so dass im Bereich des Einsatzes ein Durchpicken des Bodens des Schalenkörpers der Wasserauffangschale nicht möglich ist.

Einem oberen Rand des umlaufenden Kragens der Vertiefung sind ein flächiger Ring oder eine Ringscheibe zugeordnet. Die Ringscheibe umgibt dann den oberen äußeren Rand des Kragens der Vertiefung. Durch die Ringscheibe wird auch ein die Vertiefung umgebender Bereich des Bodens des Schalenkörpers vom Einsatz gegen Beeinträchtigungen durch die Schnäbel der Tiere geschützt. Das trägt zur verbesserten Wirkung des Einsatzes aus gegen die Schnäbel der Tiere widerstandsfähigem Material bei.

Bevorzugt ist es vorgesehen, den Einsatz hutartig, insbesondere zylinderhutartig, zu stufen bzw. abzustufen. Dadurch lässt sich eine Vertiefung ausreichender Größe im Einsatz bilden.

Weiterhin ist es bevorzugt vorgesehen, die Vertiefung im Inneren des Einsatzes, vorzugsweise in der Mitte desselben, vorzusehen, wobei diese Vertiefung durch die gestufte und/ oder abgestufte Ausbildung des Einsatzes, insbesondere eines inneren bzw. mittigen Teils desselben, zustande kommt. Es entsteht so eine napfartige Vertiefung im Einsatz, in der sich das restliche Wasser der Wasserauffangschale sammeln kann. Durch eine entsprechende Bemessung, nämlich Grundfläche und/oder Tiefe der Vertiefung, kann die von derselben aufzunehmende Wassermenge den Anforderungen entsprechend vorgegeben werden. Zumindest ist die Vertiefung zur Aufnahme einer solchen Wassermenge restlichen Wassers in der Wasserauffangschale ausgebildet, die die Tiere zum Picken veranlassen. Es ist so sichergestellt, dass die Tiere nur im Bereich des Einsatzes auf die innere Schalenfläche picken, so dass es ausreicht, nur in einem mittleren, innenliegenden Teil des Bodens des Schalenkörpers den Einsatz aus widerstandsfähigem Material vorzusehen.

Die Vertiefung verfügt vorzugsweise über eine Innenfläche und einen äußeren Rand derselben umgebenden, insbesondere hochstehenden Kragen. Dadurch kommt die zylinderhutartige Gestalt der Vertiefung zustande. Eine solche Vertiefung lässt sich einfach bilden, beispielsweise durch eine Verformung, vor allem Kaltverformung, aus einem flächigen Rohling zur Bildung des Einsatzes.

Beim vorteilhaft weitergebildeten Einsatz sind seine Innenfläche und/oder Ringscheibe ebenflächig, zumindest annähernd ebenflächig oder leicht zur Mitte hin tiefer werdend gewölbt ausgebildet. Insbesondere bei ebenflächig ausgebildeter Innenfläche verteilt sich das restliche Wasser über die gesamte Grundfläche der Vertiefung des Einsatzes. Dadurch wird genügend Raum für mehrere Schnäbel geschaffen, so dass mehrere Tiere gleichzeitig das restliche Wasser aus der Wasserauffangschale aufnehmen können. Gleichwohl kann die Innenfläche auch leicht gewölbt und dadurch ballig ausgebildet sein, und zwar so, dass die tiefste Stelle der balligen Innenfläche etwa in der Mitte der Vertiefung liegt. In dieser mittigen tiefsten Stelle der Vertiefung kann sich restliches Wasser dann gezielt sammeln, was es den Tieren ermöglicht, auch kleine Restmengen des Wassers noch aus dem Schalenkörper aufzunehmen.

Bevorzugt ist es vorgesehen, dass die Innenfläche und die Ringscheibe des Einsatzes in unterschiedlichen, parallelen Ebenen oder auch nur leicht rotationssymmetrisch gekrümmten Ebenen angeordnet sind. Dabei liegt die Innenfläche der Vertiefung unter der Ringscheibe. Es kann vorgesehen sein, dass die Innenfläche um 1,5 mm bis 0,3 mm, vorzugsweise 1 mm bis 0,5 mm, unter der Fläche der Ringscheibe liegt. Dadurch wird ein ausreichendes Reservoir für restliches Wasser im Bereich des Einsatzes geschaffen und gewährleistet, dass ein Durchpicken des Schalenkörpers von den Schnäbeln der Tiere unterbleibt.

Eine weitere bevorzugte Ausgestaltungsmöglichkeit der Wasserauffangschale sieht es vor, den Einsatz so auszubilden, dass ein äußerer Rand seiner Ringscheibe von einem Kragen umgeben ist. Bevorzugt handelt es sich dabei um einen doppelt abgewinkelten Kragen mit einem etwa L-förmigen Profil. Während die Ringscheibe an einem umlaufenden inneren Rand durch die Vertiefung gestuft bzw. abgestuft ist, entsteht durch den doppelt abgewinkelten Kragen eine weitere Abstufung am äußeren umlaufenden Rand der Ringscheibe. Die durch den doppelt abgewinkelten Kragen entstehende äußere Abstufung dient bevorzugt zur Fixierung des Einsatzes im bzw. am Boden des Schalenkörpers.

Bevorzugt ist der Kragen derart doppelt abgewinkelt, dass ein ein freies Ende aufweisender Schenkel desselben mindestens zum Teil in der Ebene der Innenfläche der Vertiefung des Einsatzes liegt. Der Schenkel kann aber auch etwas oberhalb oder unterhalb der durch die Innenfläche des Einsatzes verlaufenden Ebene liegen. Entscheidend ist, dass die Oberseite des Schenkels unter der Oberseite, insbesondere einer oberen Ebene, der Ringscheibe liegt.

Bei einer vorteilhaft ausgebildeten Wasserauffangschale ist es vorgesehen, dass die Vertiefung des Einsatzes eine kreisförmige Innenfläche aufweist und die Ringscheibe kreisringförmig ausgebildet ist. Das begünstigt das Ansammeln des restlichen Wassers im Bereich des Einsatzes des Schalenkörpers. Die runden bzw. kreisringförmigen Flächen führen auch zu einer gleichzeitigen allseitig guten Zugänglichkeit des Schalenkörpers, insbesondere seiner Mitte, durch Schnäbel mehrerer Tiere.

Eine vorteilhafte Ausgestaltungsmöglichkeit des Einsatzes sieht es vor, diesen einstückig auszubilden. Ein solcher einstückiger Einsatz lässt sich einfach durch Verformung und/ oder Pressen eines kreisförmigen Zuschnitts bilden, insbesondere durch Kaltverformung, aber auch in einer Pressform.

Des Weiteren kann es vorgesehen sein, mindestens die mit den Schnäbeln der Tiere in Kontakt kommende Innenseite des gesamten Einsatzes oder mindestens einen innenliegenden Teil desselben rau auszubilden oder aufzurauen. Dadurch können die Tiere beim Trinken ihre Schnäbel an den diesen zugewandten Flächen des Einsatzes abwetzen und dadurch ihre Schnäbel pflegen.

Gemäß einer bevorzugten Weiterbildung der Wasserauffangschale ist es vorgesehen, den Einsatz im Boden des Schalenkörpers der Wasserauffangschale einzulassen und/ oder einzubetten. Bevorzugt ist der Einsatz im Bereich der tiefsten Stelle des Bodens eingelassen und/oder eingebettet. In der Regel liegt die tiefste Stelle des Bodens in der Mitte desselben, wenn der Boden allseitig leicht gewölbt ist, wodurch die tiefste Stelle in der Mitte des Bodens sich befindet. Dann sammelt sich auch bei aufgrund leicht schräg verlaufenden strangartigen Wasserversorgungsleitungen und dadurch etwas schrägen Wasserauffangschalen ein Rest der Flüssigkeit in der Vertiefung des zur Bildung derselben gestuften bzw. abgestuften Einsatzes. Alternativ kann es aber vorgesehen sein, den Boden des Schalenkörpers ebenflächig auszubilden. In der Regel sammelt sich auch dann das restliche Wasser zumindest größtenteils in der Vertiefung des Einsatzes.

Der Einsatz ist vorzugsweise derart im Boden des Schalenkörpers angeordnet, dass eine Oberseite der Ringscheibe des Einsatzes nur so weit im Boden eingelassen ist, dass die Ringscheibe bündig mit einer innenseitigen Bodenfläche des Bodens abschließt, während der die Ringscheibe außen umgebende tieferliegende Kragen im Boden des Schalenkörpers eingebettet ist, indem er vom Kunststoff der innenseitigen Schalenfläche des Schalenkörpers überdeckt ist. Durch die vollständige Einbettung des die Ringscheibe außen umgebenden Kragens im Kunststoff des Schalenkörpers liegt dieser Kragen überdeckt und allseitig umgeben im Kunststoff des Bodens des Schalenkörpers, wodurch der Einsatz dauerhaft fest formschlüssig im Boden des Schalenkörpers fixiert ist und die die Vertiefung umgebende Ringscheibe nur so weit in den Boden des Schalenkörpers eingelassen ist, bis die Oberseite der Ringscheibe bündig mit der Innenfläche des Schalenkörpers abschließt und dadurch nicht vom Kunststoff des Schalenkörpers überdeckt ist. Auf diese Weise entsteht ein stufenloser Übergang vom Kunststoff des Schalenkörpers zum Außenumfang der Ringscheibe des Einsatzes. Abgestuft ist lediglich ein innerer Bereich des Einsatzes selbst, indem seine Innenfläche tiefer liegt als die Ringscheibe zur Bildung der einen Wasserrest aufnehmenden Vertiefung im mittleren bzw. zentralen Bereich des Einsatzes. Dabei bildet die Ringscheibe eine Art Deich um die tieferliegende Innenfläche, wobei die Vertiefung bei der Herstellung der Wasserauffangschale nicht vom Kunststoff derselben ausgefüllt ist und somit leer bleibt zur Aufnahme eines Wasserrests.

Es ist des Weiteren vorgesehen, eine Unterseite des gesamten Einsatzes vom Kunststoff einer außenseitigen Schalenfläche des Bodens des Schalenkörpers zu bedecken. Dadurch ist die untere Seite des Einsatzes vollständig vom Kunststoff abgedeckt und somit als Ganzes im Boden des Schalenkörpers eingebettet.

Eine Tiertränke zur Lösung der eingangs genannten Aufgabe weist eine Wasserauffangschale auf, die zumindest teilweise gemäß der vorstehend beschriebenen Weise ausgebildet ist. Die Wasserauffangschalen einer solchen Tiertränke werden durch ihre Einsätze gegen Beeinträchtigungen durch die Schnäbel der Tiere geschützt, insbesondere gegen Durchpicken.

Bevorzugte Ausführungsbeispiele der Erfindung werden nachfolgend anhand der Zeichnung näher erläutert. In dieser zeigen:
- Fig. 1: eine perspektivische Darstellung des ersten Ausführungsbeispiels einer Wasserauffangschale mit nur einem einzigen Tragarm,
- Fig. 2: einen mittigen Vertikalschnitt durch den einzigen Tragarm der Wasserauffangschale der Fig. 1,
- Fig. 3: eine Seitenansicht der Wasserauffangschale der Fig. 1 und 2,
- Fig. 4: eine vergrößerte Einzelheit IV aus dem Schnitt der Fig. 2 im Bereich eines Einsatzes im Boden eines Schalenkörpers der Wasserauffangschale,
- Fig. 5: eine perspektivische Darstellung einer Wasserauffangschale mit zwei Tragarmen gemäß einem zweiten Ausführungsbeispiel der Erfindung,
- Fig. 6: einen mittigen Vertikalschnitt zwischen den beiden Tragarmen der Wasserauffangschale der Fig. 5,
- Fig. 7: eine Seitenansicht der Wasserauffangschale der Fig. 5 und 6, und
- Fig. 8: ein alternatives Ausführungsbeispiel des Einsatzes in einer Darstellung analog zur Fig. 4.

Die gezeigten Wasserauffangschalen sind für Tiertränken vorgesehen. Insbesondere handelt es sich bei den Tiertränken um sogenannte Strangtränken für die Bodenhaltung von Schnabeltieren, wie vor allem Geflügel. Die Tiertränken ermöglichen es Schnabeltieren unterschiedlichen Alters, vor allem Hühner, Enten, Puten, Gänse oder dergleichen, ihren Wasserbedarf selbsttätig zu decken.

Die als Strangtränke ausgebildete Tiertränke verfügt über eine langgestreckte, rohrartige Wasserversorgungsleitung mit mehreren voneinander beabstandeten Tränkestellen. Vorzugsweise sind alle Tränkestellen gleich ausgebildet. Die Erfindung eignet sich aber auch für Tiertränken mit nur einer einzigen Tränkestelle, die eine geeignete Wasserversorgung aufweist.

Jede Tränkestelle weist im Wesentlichen ein Tränkeventil und eine Wasserauffangschale auf. Das jeweilige Tränkeventil ist mit einem Gehäuse von unten in die Wasserversorgungsleitung eingeschraubt oder eingesteckt. Das Tränkeventil verfügt über einen Ventilstift, der mit einem unteren, freien Betätigungsende aus dem Gehäuse herausragt. Das Betätigungsende des jeweiligen Tränkeventils ist von den Schnäbeln der Tiere verkippbar und/oder anhebbar. Dadurch wird das Tränkeventil geöffnet, wodurch es Wasser, und zwar reines Wasser oder Wasser mit einem Zusatz, abgibt. Es handelt sich dabei um relativ kleine Wassermengen, die solange aus dem Tränkeventil herausfließen bzw. heraustropfen, bis die Tiere mit ihren Schnäbeln das Betätigungsende des Ventilstifts wieder loslassen, wodurch der Ventilstift in seine unbetätigte Ausgangsstellung zurückkehrt und dabei das Tränkeventil schließt.

Beim von den Schnäbeln der Tiere geöffneten Tränkeventil wird das aus demselben austretende Wasser nur zum Teil oder gar nicht sogleich von den Tieren aufgenommen. Das gesamte Wasser oder nur das überschüssige Wasser sammelt sich dann in der jeweiligen Wasserauffangschale. Die Tiere nehmen dann das Wasser, vor allem restliches Wasser, aus der Wasserauffangschale auf.

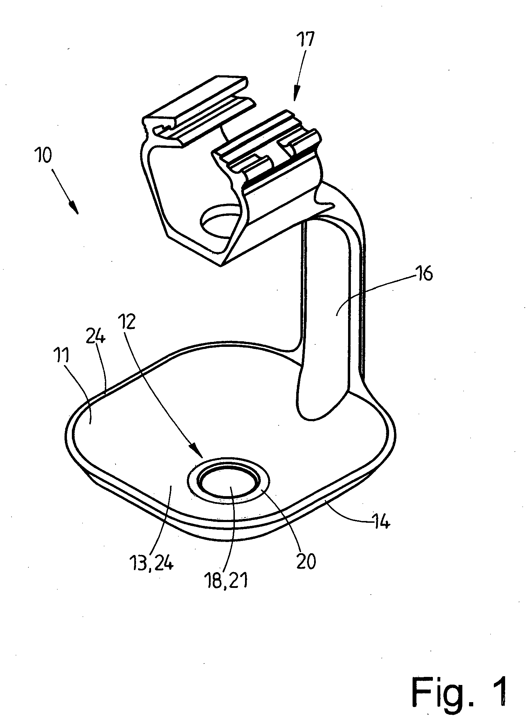

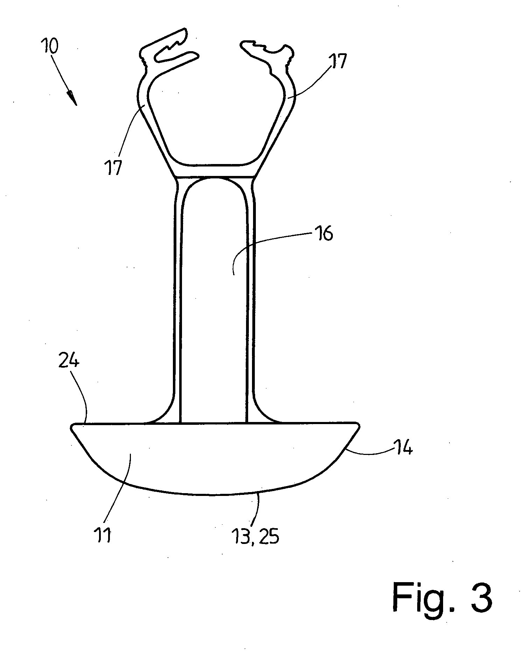

Die in den Fig. 1 bis 4 gezeigte Wasserauffangschale 10 verfügt über einen einen Vorrat an Wasser aufnehmenden Schalenkörper 11 mit einem Einsatz 12. Der Schalenkörper 11 verfügt über einen Boden, der von einer umlaufenden, hochgezogenen Randeinfassung 14 umgeben ist. Der Einsatz 12 ist dem Boden 13 zugeordnet, und zwar seiner innenseitigen Bodenfläche 15. Im gezeigten Ausführungsbeispiel ist der Einsatz 12 etwa in der Mitte des Bodens 13 angeordnet. Der Einsatz 12 ist vorzugsweise ganz oder zumindest größtenteils im Boden 13 des Schalenkörpers 11 eingelassen. Im gezeigten Ausführungsbeispiel ist der Einsatz 12 auch teilweise im Boden 13 eingebettet. Der Boden 13 des Einsatzes 12 ist in der gezeigten Wasserauffangschale 10 leicht umlaufend gewölbt, so dass die tiefste Stelle sich in der Mitte befindet, und zwar dort, wo auch der Einsatz 12 angeordnet ist.

Die in den Fig. 1 bis 4 gezeigte Wasserauffangschale 10 verfügt über einen einzigen Tragarm 16. Der Tragarm 16 geht vom oberen Rand 24 der Randeinfassung 14 aus und erstreckt sich quer zur Ebene des Bodens 13 des Schalenkörpers 11 senkrecht nach oben. An ein dem Schalenkörper 11 gegenüberliegendes, höheres Ende des Tragarms 16 schließt sich ein Befestigungsmittel für die Wasserauffangschale 10 an beispielsweise einer strangartigen Wasserversorgungsleitung an. Im gezeigten Ausführungsbeispiel ist dieses Befestigungsmittel als ein Clipverschluss 17 ausgebildet. Dieser ermöglicht eine lösbare Verbindung der Wasserauffangschale 10 mit der Wasserversorgungsleitung. Aber auch andere Befestigungsmittel sind denkbar.

Die Wasserauffangschale 10 ist abgesehen vom Einsatz 12 vollständig aus Kunststoff gebildet. Bevorzugt ist die Wasserauffangschale aus thermoplastischem Kunststoff im Spritzgussverfahren hergestellt. Dadurch ist die Wasserauffangschale 10 abgesehen vom Einsatz 12 einstückig ausgebildet, in dem der Schalenkörper 11 mit dem Boden 13 und der Randeinfassung 14 sowie der Tragarm 16 und der Clipverschluss 17 einstückig zusammenhängen.

Der Einsatz 12 besteht aus einem im Vergleich zum Kunststoff der Wasserauffangschale 10 widerstandsfähigeren Werkstoff. Hierbei kann es sich um Stahl, vorzugsweise rostfreien Stahl, glasfaserverstärkten Kunststoff, Aluminium oder auch Keramik handeln. Diese Werkstoffe sind von den Schnäbeln der Tiere nicht beeinträchtigbar. Die Schnäbel der Tiere können solche Einsätze 12 daher nicht durchpicken. Außerdem kann ein Einsatz 12 aus einem der genannten Werkstoffe auch zum Abwetzen der Schnäbel der Tiere beitragen, insbesondere wenn die innenseitige Fläche des Einsatzes 12 aufgeraut bzw. angeraut ist.

Der Einsatz 12 ist zum Einsetzen bzw. Einlegen in eine Spritzgussform zur Herstellung der Wasserauffangschale 10 geeignet, insbesondere ausgebildet. Beim Spritzgießvorgang wird dann der Einsatz 12 in der Spritzgussform teilweise, insbesondere von der gesamten Rückseite und einem äußeren Ringbereich von Kunststoff umspritzt, wobei der Einsatz 12 im Boden 13 des Schalenkörpers 11 eingelassen und/oder eingebettet wird.

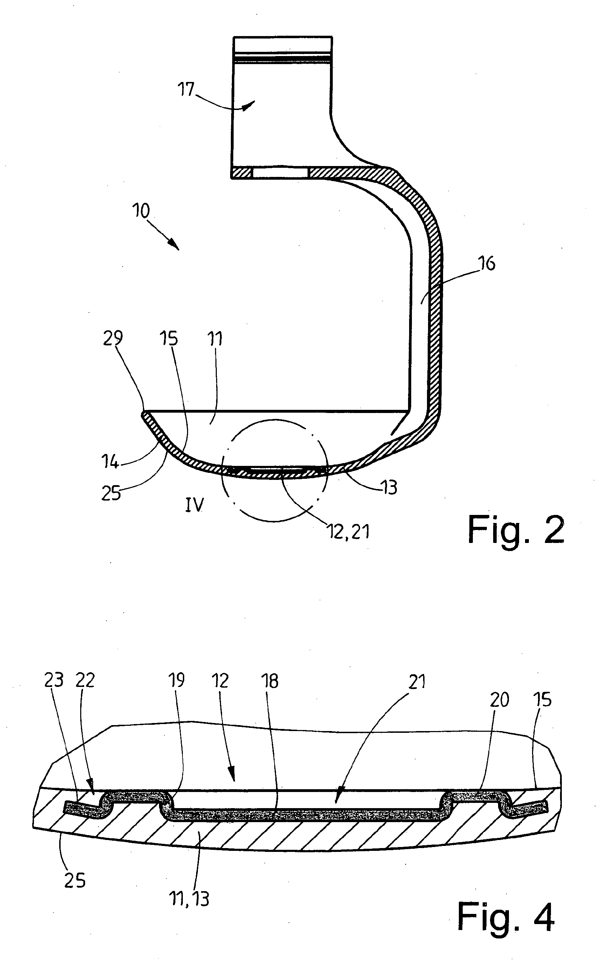

Die Fig. 4 lässt den Querschnitt des Einsatzes 12 und seine Anordnung im Boden 13 des Schalenkörpers 11 erkennen.

Der gezeigte Einsatz 12 aus einem Blech aus vorzugsweise rostfreiem Stahl ist geprägt, insbesondere kaltverformt. Dabei entsteht der gestufte bzw. abgestufte Einsatz 12. Durch das Prägen und/oder Kaltverformen erhält der Einsatz 12 eine kreisförmige, tieferliegende Innenfläche 18, die von einem umlaufenden, zylinderartigen Kragen 19 umgeben ist, wodurch der Einsatz 12 eine napfartige Vertiefung 21 erhält. Die Wandstärke bzw. Blechdicke des Einsatzes 12 beträgt 0,4 mm bis 0,8 mm, vorzugsweise 0,5 mm bis 0,7 mm.

Im gezeigten Einsatz 12 ist die Innenfläche 18 ebenflächig ausgebildet, indem sie diametral gradlinig verläuft, sowie es die Fig. 4 verdeutlicht. An einen von der Innenfläche 18 weggerichteten und über derselben liegenden Rand des Kragens 19 schließt sich ein umlaufender Ring an, der im gezeigten Ausführungsbeispiel als eine ebenflächige Ringscheibe 20 ausgebildet ist. Die Kreisringfläche der Ringscheibe 20 liegt auch auf einer ebenen, geradlinigen Fläche. Diese Fläche verläuft parallel zur Innenfläche 18, aber etwas oberhalb derselben. Der Abstand zwischen der Oberseite der Innenfläche 18 und der Oberseite der Ringscheibe 20 kann zwischen 0,5 mm und 2,0 mm liegen. Vorzugsweise beträgt der Abstand 1,0 mm bis 1,5 mm. Dieser Abstand entspricht der Tiefe der zwischen der Innenfläche 18 und der gegenüber dieser höher liegenden Ringscheibe 20 gebildeten Vertiefung 21 des Einsatzes 12. Der Durchmesser der Vertiefung 21 entspricht dem Durchmesser der Innenfläche 18 bzw. der Innenseite des Kragens 19 bzw. dem Durchmesser des inneren Rands der Ringscheibe 20. Dieser Durchmesser beträgt beim gezeigten Einsatz 12 etwa 10 mm bis 20 mm, vorzugsweise etwa 14 mm bis 18 mm.

Der äußere Rand der Ringscheibe 20 ist von einem zweiten umlaufenden Kragen 22 umgeben. Dieser Kragen 22 verfügt über ein L-förmiges Profil mit einem sich am äußeren Rand der Ringscheibe 20 anschließenden kürzeren Schenkel, der ähnlich wie der Kragen 19 einen zylinderartigen Teil des Kragens 22 bildet und einen längeren Schenkel 23, der gegenüber dem kürzeren Schenkel um etwa 90° abgewinkelt ist. Durch die L-förmige Ausbildung des Kragens 22 verfügt der Einsatz 12 über eine zweite, äußere Stufung bzw. Abstufung. Dadurch liegt der längere Schenkel 23 des Kragens 22 unterhalb der Ringscheibe 20, und zwar etwa in der Ebene der Innenfläche 18 bzw. geringfügig darüber (Fig. 4).

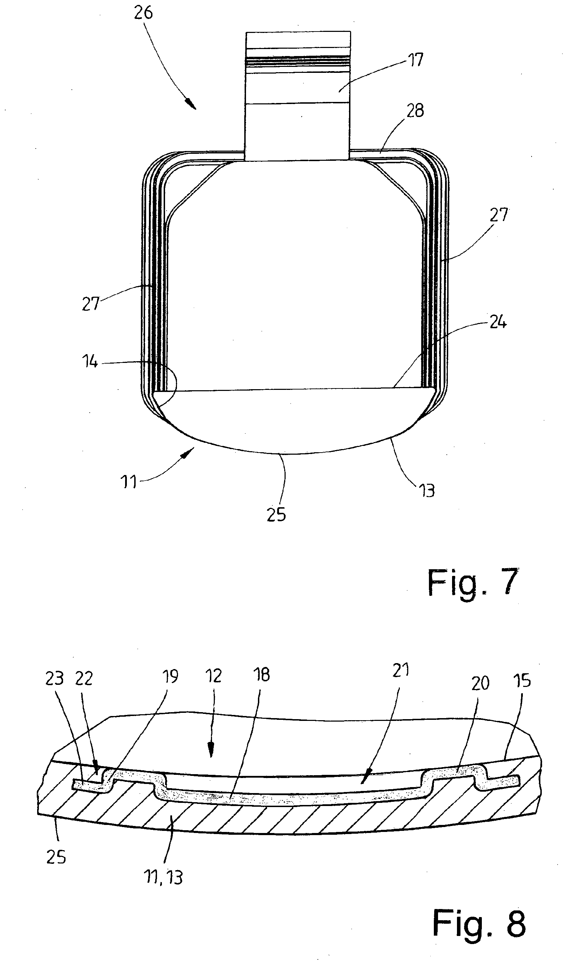

Die Fig. 8 zeigt ein alternatives Ausführungsbeispiel des Einsatzes 12. Dieser Einsatz 12 entspricht in der Ausbildung und Bemessung dem zuvor beschriebenen Einsatz 12, insbesondere dem in der Fig. 4 gezeigten Einsatz 12. Auch der Einsatz 12 der Fig. 8 ist aus einem dünnwandigen Blech aus rostfreiem Stahl geprägt.

Der Einsatz 12 der Fig. 8 verfügt über keine ebene, sondern eine gewölbte Innenfläche 18, deren tiefste Stelle etwa in der Mitte der Innenfläche 18 und somit des Einsatzes 12 liegt. Ebenso ist die Ringscheibe 20 des Einsatzes der Fig. 8 gewölbt ausgebildet. Alternativ kann es aber auch vorgesehen sein, nur die Innenfläche 18 gewölbt auszubilden, aber nicht die Ringscheibe 20. Die Wölbung des Einsatzes 12, insbesondere seiner Innenfläche 18 und gegebenenfalls auch seiner Ringscheibe 20, verläuft parallel zur Wölbung der innenseitigen Bodenfläche 15 des Bodens 13 des Schalenkörpers 11. Bevorzugt beträgt der Radius der Wölbung des Einsatzes 12, vor allem seiner Innenfläche 18 und/oder der Ringscheibe 20, 60 mm bis 100 mm, insbesondere 70 mm bis 85 mm.

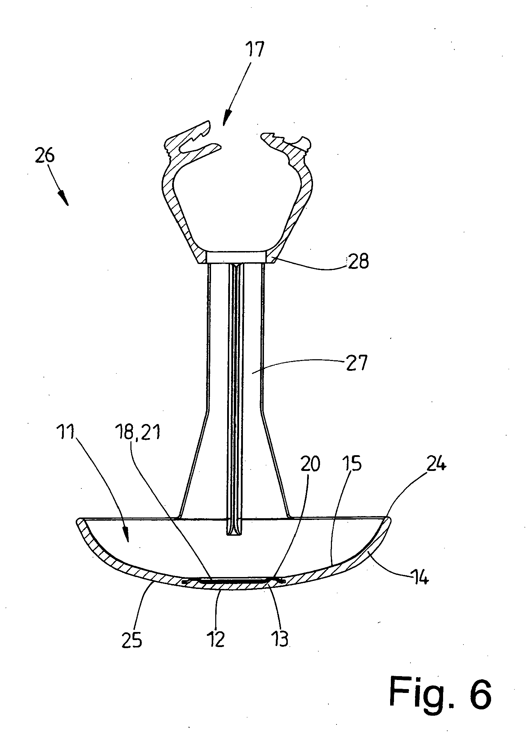

Im Übrigen entspricht der Einsatz 12 der Fig. 8 dem Einsatz der Fig. 4, weswegen auf die im Zusammenhang mit den Fig. 1 bis 7 erfolgte Beschreibung des Einsatzes 12 Bezug genommen wird.

Der Einsatz 12 ist mittig im Boden 13 des Schalenkörpers 11 eingelassen und/oder eingebettet. Damit das möglich ist, ist die gesamte Höhe des Einsatzes 12 zwischen der Oberseite der Ringscheibe 20 und der Unterseite der Innenfläche 18 geringer als die Wandstärke des Bodens 13 des Schalenkörpers 11 im Bereich des Einsatzes 12. Bevorzugt beträgt die Wandstärke des Bodens 13 das 1 ½- bis 2-fache der Gesamthöhe des Einsatzes 12 (Fig. 4).

Der Einsatz 12 ist soweit von oben in den Boden 13 eingelassen, dass die Oberseite der Ringscheibe 20 etwa bündig mit der innenseitigen Bodenfläche 15 des Schalenkörpers 11 mittig abschließt. Dadurch geht die innenseitige Bodenfläche 15 des Schalenkörpers 11 übergangslos in die Oberseite der Ringscheibe 20 des Einsatzes 12 über. Dadurch sind die Oberseite der Ringscheibe 20 und auch die Vertiefung 21 des Einsatzes 12 nicht vom Kunststoff des Bodens 13 des Schalenkörpers 11 überdeckt. Die Oberseite der Ringscheibe 20 und der Vertiefung 21, insbesondere ihrer Innenfläche 18, liegen somit frei, so dass Tiere, die aus der Vertiefung 21 restliches Wasser aufnehmen wollen, mit ihren Schnäbeln auf die Innenfläche 18 der Vertiefung 21 und gegebenenfalls die Ringscheibe 20 picken, aber nicht in dem die Ringscheibe 20 umgebenden und aus Kunststoff gebildeten äußeren Teil des Bodens 13.

Im Gegensatz zur Ringscheibe 20 und zur Vertiefung 21 ist der äußere Kragen 22, insbesondere der einen umlaufenden Ring bildende Schenkel 23 desselben, durch seine Abstufung gegenüber der Ringscheibe 20 vollständig im den Einsatz 12 umgebenden Kunststoff des Bodens 13 eingebettet. Dadurch befindet sich eine dünne Schicht der aus Kunststoff gebildeten innenseitigen Bodenfläche 24 des Schalenkörpers 11 über dem äußeren Kragen 22, insbesondere über seinem umlaufenden Schenkel 23. Hierdurch wird der Einsatz 12 formschlüssig im diesen umgebenden Kunststoff des Bodens 13 eingebettet und dadurch im Boden 13 fixiert.

Im Gegensatz zur Oberseite des Einsatzes 12 ist die komplette Unterseite des Einsatzes 12 vom Kunststoff des Bodens 13 des Schalenkörpers 11 abgedeckt bzw. überdeckt (Fig. 4). Dadurch ist eine außenseitige Bodenfläche 25 des Schalenkörpers 11 vollständig aus Kunststoff gebildet und der Einsatz 13 von der außenseitigen Bodenfläche 25 unter dem Boden 13 nicht sichtbar.

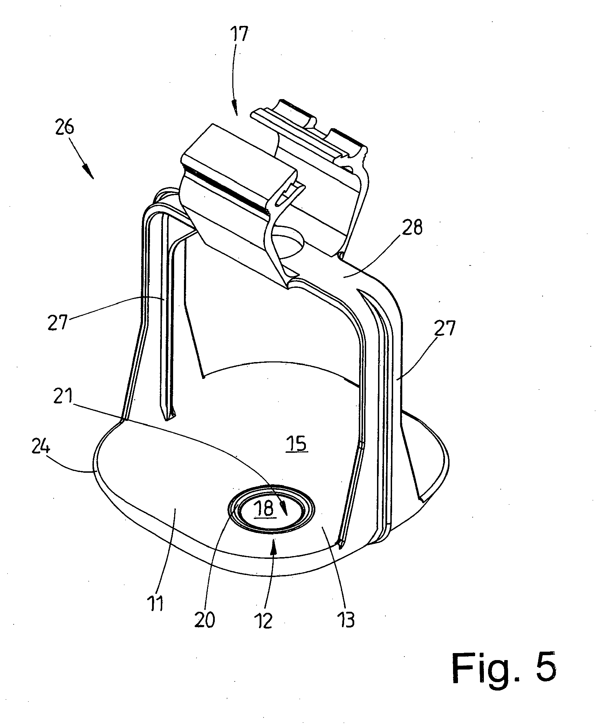

Die Fig. 5 bis 7 zeigen eine Wasserauffangschale 26, die über zwei gegenüberliegende gleiche Tragarme 27 verfügt, die an ihren oberen Enden durch einen Steg 28 verbunden sind, auf dem mittig der Clipverschluss 17 oder ein anderes Befestigungsmittel angeordnet ist. Im Übrigen entspricht die Wasserauffangschale 26 der Wasserauffangschale 10 der Fig. 1 bis 4. Deswegen werden für gleiche Teile gleiche Bezugsziffern verwendet. Insbesondere sind der Schalenkörper 11 und der Einsatz 12 bei der Wasserauffangschale 26 genauso ausgebildet wie bei der Wasserauffangschale 10. Vor allem ist der Einsatz 12 auch bei der Wasserauffangschale 26 gestuft bzw. abgestuft ausgebildet und in den Boden 13 des Schalenkörpers 11 eingelassen und/oder eingebettet. Im Übrigen wird zur Vermeidung von Wiederholungen auf die Beschreibung der Wasserauffangschale 10, insbesondere ihres Schalenkörpers 11 und des diesem zugeordneten Einsatzes 12, verwiesen.

Die gezeigten Wasserauffangschalen 10 und 26 verfügen über gleiche Schalenkörper 11. Diese Schalenkörper 12 weisen eine quadratische Grundfläche mit stark abgerundeten Ecken auf. Dementsprechend verfügt ein freier oberer Rand 24 der Randeinfassung 14 des jeweiligen Schalenkörpers 11 über einen quadratischen Verlauf mit abgerundeten Ecken. Die Erfindung eignet sich aber auch für Wasserauffangschalen, deren Schalenkörper eine andere Grundfläche oder Geometrie aufweisen. Beispielsweise können die Schalenkörper eine runde oder auch ovale Grundfläche mit rundem bzw. ovalen oberen Rand aufweisen. Denkbar ist es auch, die Böden der Schalenkörper ebenflächig oder nahezu ebenflächig auszubilden.

### Bezugszeichenliste:

- 10: Wasserauffangschale
- 11: Schalenkörper
- 12: Einsatz
- 13: Boden
- 14: Randeinfassung
- 15: innenseitige Bodenfläche
- 16: Tragarm
- 17: Clipverschluss
- 18: Innenfläche
- 19: Kragen
- 20: Ringscheibe
- 21: Vertiefung
- 22: Kragen
- 23: langer Schenkel
- 24: oberer Rand
- 25: außenseitige Bodenfläche
- 26: Wasserauffangschale
- 27: Tragarm
- 28: Steg

## Patentansprüche

1. Wasserauffangschale für eine Tiertränke für Schnabeltiere wie Hühner, Enten, Puten, Küken und dergleichen, mit einem einen Wasservorrat aufnehmenden Schalenkörper (11) aus Kunststoff, der einen Boden (13) und eine diesen umgebende Randeinfassung (14) aufweist, wobei dem Boden (13) mittig ein Einsatz (12) aus einem widerstandsfähigen Material zugeordnet ist und mit wenigstens einem Tragarm (16, 27) zur Verbindung des Schalenkörpers (11) mit einer Wasserversorgungsleitung, der Tränkeventile zugeordnet sind, und dass der Einsatz (12) aus Stahl, rostfreiem Stahl, Aluminium, glasfaserverstärktem Kunststoff oder Keramik gebildet ist, **dadurch gekennzeichnet, dass** der Einsatz (12) gestuft bzw. abgestuft ausgebildet ist und dass der Einsatz (12) eine innere und/oder mittige Vertiefung (21) aufweist, die von einer Ringscheibe (20) umgeben ist, wobei die Ringscheibe (20) an einem oberen Rand eines eine Innenfläche (18) umgebenden Kragens (19) der Vertiefung (21) anschließt.

2. Wasserauffangschale nach Anspruch 1, **dadurch gekennzeichnet, dass** der Einsatz (12) hutartig gestuft oder hutartig abgestuft ist.

3. Wasserauffangschale nach Anspruch 1 oder 2, **dadurch gekennzeichnet, dass** die innere und/oder mittige Vertiefung (21) durch die gestufte und/oder abgestufte Ausbildung des Einsatzes (12) gebildet ist.

4. Wasserauffangschale nach Anspruch 1, **dadurch gekennzeichnet, dass** die mittige Vertiefung (21) die Innenfläche (18) und den einen äußeren Rand derselben umgebenden, hochstehenden Kragen (19) aufweist.

5. Wasserauffangschale nach einem der vorhergehenden Ansprüche, **dadurch gekennzeichnet, dass** die Wandung des die Innenfläche (18) umgebenden Kragens (19) rechtwinklig zur Ebene der Ringscheibe (20) und/oder der Innenfläche (18) verläuft.

6. Wasserauffangschale nach einem der vorhergehenden Ansprüche, **dadurch gekennzeichnet, dass** die Innenfläche (18) und/oder die Ringscheibe (20) ebenflächig oder gewölbt ausgebildet sind, wobei die tiefste Stelle der Innenfläche (18) sich in der Mitte derselben befindet.

7. Wasserauffangschale nach Anspruch 1, **dadurch gekennzeichnet, dass** die Innenfläche (18) und die Ringscheibe (20) in unterschiedlichen, parallelen Ebenen liegen, wobei die Innenfläche (18) unter der Ringscheibe (20) angeordnet ist, indem die Ebene der Innenfläche (18) unter der Ebene der Ringscheibe (20) liegt.

8. Wasserauffangschale Anspruch 1, **dadurch gekennzeichnet, dass** ein äußerer Rand der Ringscheibe (20) von einem Kragen (22) umgeben ist.

9. Wasserauffangschale nach Anspruch 1, **dadurch gekennzeichnet, dass** der äußere Rand der Ringscheibe (20) von einem doppelt abgewinkelten Kragen (22) mit einem L-förmigen Profil umgeben ist, wobei ein ein freies Ende aufweisender Schenkel (23) des L-förmig profilierten Kragens (22) mindestens zum Teil in der Ebene oder in der Nähe der Ebene der Innenfläche (18) des Einsatzes (12) liegt.

10. Wasserauffangschale nach einem der vorhergehenden Ansprüche, **dadurch gekennzeichnet, dass** die Innenfläche (18) der Vertiefung (21) kreisförmig und die die Vertiefung (21) umgebende, höhere liegende Ringscheibe (20) kreisringförmig ausgebildet sind.

11. Wasserauffangschale nach einem der vorhergehenden Ansprüche, **dadurch gekennzeichnet, dass** der Einsatz (12) in der Mitte des Bodens (13) des Schalenkörpers (11) eingelassen und/oder eingebettet ist.

12. Wasserauffangschale nach Anspruch 8, **dadurch gekennzeichnet, dass** der Einsatz (12) derart im Boden (13) des Schalenkörpers (11) eingelassen und/oder eingebettet ist, dass eine Oberseite der Ringscheibe (20) des Einsatzes (12) etwa bündig mit einer innenseitigen Bodenfläche (15) des Bodens (13) abschließt und/oder der die Ringscheibe (20) außen umgebende, gegenüber der Ringscheibe (20) abgestufte und/oder tieferliegende äußere Kragen (22) im Boden (13) des Schalenkörpers (11) eingebettet ist, indem er vom Kunststoff der innenseitigen Bodenfläche (15) des Bodens (13) des Schalenkörpers (11) überdeckt ist.

13. Wasserauffangschale nach einem der vorhergehenden Ansprüche, **dadurch gekennzeichnet, dass** eine Unterseite des gesamten Einsatzes (12) vom Kunststoff einer außenliegenden Bodenfläche (25) des Bodens (13) des Schalenkörpers (11) benetzt, bedeckt und/oder überdeckt ist.

14. Wasserauffangschale nach Anspruch 1, **dadurch gekennzeichnet, dass** die Innenfläche (18) um 0,5 mm bis 2,0 mm oder um 1,0 mm bis 1,5 mm unter der Ringscheibe (20) liegt.

15. Tiertränke für Schnabeltiere wie Hühner, Enten, Puten, Küken und dergleichen, mit mindestens einem an einer Wasserversorgungsleitung angeordneten Tränkeventil, **gekennzeichnet durch** eine dem mindestens einen Tränkeventil zugeordnete Wasserauffangschale (10; 26), die gemäß einem oder mehreren der Ansprüche 1 bis 14 ausgebildet ist.

## Claims

1. A drip cup for an animal drinker for beaked animals such as chickens, ducks, turkeys, chicks and the like, with a cup body (11) made of plastic material for accommodating a supply of water and having a bottom (13) and edging (14) surrounding the latter, wherein the bottom (13) is assigned a central insert (12) made of a resistant material, and with at least one supporting arm (16, 27) for connecting the cup body (11) to a water supply line to which drinker valves are assigned, and in that the insert (12) is formed from steel, stainless steel, aluminium, glass fibre reinforced plastic or ceramic, **characterized in that** the insert (12) has a stepped or graduated configuration and **in that** the insert (12) has an inner and/or central depression (21) which is surrounded by a ring disc (20), wherein the ring disc (20) is joined with an upper edge of a collar (19) of the depression (21) surrounding an inside surface (18).

2. The drip cup as claimed in Claim 1, **characterized in that** the insert (12) is stepped or graduated in the manner of a hat.

3. The drip cup as claimed in Claim 1 or 2, **characterized in that** the inner or central depression (21) is formed by the stepped and/or graduated configuration of the insert (12).

4. The drip cup as claimed in Claim 1, **characterized in that** the central depression (21) has the inside surface (18) and the raised collar (19) which surrounds an outer edge of the latter.

5. The drip cup as claimed in one of the preceding Claims, **characterized in that** the wall of the collar (19) surrounding the inside surface (18) runs at a right angle to the plane of the ring disc (20) and/or of the inside surface (18).

6. The drip cup as claimed in one of the preceding Claims, **characterized in that** the inside surface (18) and/or the ring disc (20) has a planar or curved configuration, wherein the lowest point of the inside surface (18) is located at the centre of the latter.

7. The drip cup as claimed in Claim 1, **characterized in that** the inside surface (18) and the ring disc (20) lie in different, parallel planes, wherein the inside surface (18) is arranged below the ring disc (20) **in that** the plane of the inside surface (18) lies below the plane of the ring disc (20).

8. The drip cup as claimed in Claim 1, **characterized in that** an outer edge of the ring disc (20) is surrounded by a collar (22).

9. The drip cup as claimed in Claim 1, **characterized in that** the outer edge of the ring disc (20) is surrounded by a double-angled collar (22) having an L-shaped profile, wherein a limb (23) of the L-shaped profiled collar (22) has a free end and lies at least in part in the plane or near the plane of the inside surface (18) of the insert (12).

10. The drip cup as claimed in one of the preceding Claims, **characterized in that** the inside surface (18) of the depression (21) is circular in shape and that the ring disc (20), which surrounds the depression (21) and is higher than the latter, is configured to be circular in shape.

11. The drip cup as claimed in one of the preceding Claims, **characterized in that** the insert (12) is recessed and/or embedded in the centre of the bottom (13) of the cup body (11).

12. The drip cup as claimed in Claim 8, **characterized in that** the insert (12) is recessed and/or embedded in the bottom (13) of the cup body (11) such that a top side of the ring disc (20) of the insert (12) is approximately flush with an inside bottom surface (15) of the bottom (13) and/or the outer collar (22) surrounding the outside of the ring disc (20) and graduated and/or situated lower with respect to the ring disc (20) is embedded in the bottom (13) of the cup body (11) **in that** it is covered by the plastic material of the inside bottom surface (15) of the bottom (13) of the cup body (11).

13. The drip cup as claimed in one of the preceding Claims, **characterized in that** a bottom side of the entire insert (12) is coated, covered or overlaid by the plastic material of an external bottom surface (25) of the bottom (13) of the cup body (11).

14. The drip cup as claimed in one of the preceding Claims, **characterized in that** the inside surface (18) lies 0.5 mm to 2,0 mm or 1.0 mm to 1.5 mm below the ring disc (20).

15. An animal drinker for beaked animals such as chickens, ducks, turkeys, chicks and the like, having at least one drinker valve positioned on a water supply line, **characterized by** a drip cup (10; 26) assigned to the at least one drinker valve and configured according to one or more of the Claims 1 to 14.

## Revendications

1. Réservoir de collecte d'eau pour un abreuvoir pour animaux pour de la volaille, par exemple des poules, des canards, des dindes, des poussins et similaires, comprenant un corps de réservoir (11) recevant une réserve d'eau qui présente un fond (13) et une bordure (14) entourant celui-ci, le fond (13) étant associé au centre à un insert (12) en matériau résistant et comprenant au moins un bras de support (16, 27) pour la connexion du corps de réservoir (11) à une conduite d'alimentation en eau, à laquelle sont associées des soupapes d'abreuvoir, et l'insert (12) étant formé d'acier, d'acier inoxydable, d'aluminium, de plastique renforcé par des fibres de verre ou de céramique, **caractérisé en ce que** l'insert (12) est réalisé sous forme étagée ou échelonnée et **en ce que** l'insert (12) présente un renfoncement intérieur et/ou central (21) qui est entouré par une rondelle annulaire (20), la rondelle annulaire (20) se raccordant à un bord supérieur d'un collet (19) du renfoncement (21) entourant une surface intérieure (18).

2. Réservoir de collecte d'eau selon la revendication 1, **caractérisé en ce que** l'insert (12) est étagé ou échelonné en forme de chapeau.

3. Réservoir de collecte d'eau selon la revendication 1 ou 2, **caractérisé en ce que** le renfoncement intérieur et/ou central (21) est formé par la réalisation étagée et/ou échelonnée de l'insert (12).

4. Réservoir de collecte d'eau selon la revendication 1, **caractérisé en ce que** le renfoncement central (21) présente la surface intérieure (18) et le collet (19) redressé, entourant un bord extérieur de celle-ci.

5. Réservoir de collecte d'eau selon l'une quelconque des revendications précédentes, **caractérisé en ce que** la paroi du collet (19) entourant la surface intérieure (18) s'étend perpendiculairement au plan de la rondelle annulaire (20) et/ou de la surface intérieure (18).

6. Réservoir de collecte d'eau selon l'une quelconque des revendications précédentes, **caractérisé en ce que** la surface intérieure (18) et/ou la rondelle annulaire (20) sont réalisées avec une surface plane ou courbe, le point le plus profond de la surface intérieure (18) se trouvant au milieu de celle-ci.

7. Réservoir de collecte d'eau selon la revendication 1, **caractérisé en ce que** la surface intérieure (18) et la rondelle annulaire (20) sont situées dans des plans parallèles différents, la surface intérieure (18) étant disposée sous la rondelle annulaire (20) du fait que le plan de la surface intérieure (18) est situé sous le plan de la rondelle annulaire (20).

8. Réservoir de collecte d'eau selon la revendication 1, **caractérisé en ce qu'**un bord extérieur de la rondelle annulaire (20) est entouré par un collet (20).

9. Réservoir de collecte d'eau selon la revendication 1, **caractérisé en ce que** le bord extérieur de la rondelle annulaire (20) est entouré par un collet (22) à double courbure avec un profilé en forme de L, une branche (23) du collet (22) avec un profilé en forme de L, présentant une extrémité libre, étant située au moins en partie dans le plan ou à proximité du plan de la surface intérieure (18) de l'insert (12).

10. Réservoir de collecte d'eau selon l'une quelconque des revendications précédentes, **caractérisé en ce que** la surface intérieure (18) du renfoncement (21) est circulaire et la rondelle annulaire (20) située plus haut, entourant le renfoncement (21), est annulaire circulaire.

11. Réservoir de collecte d'eau selon l'une quelconque des revendications précédentes, **caractérisé en ce que** l'insert (12) est incorporé et/ou intégré dans le centre du fond (13) du corps de réservoir (11).

12. Réservoir de collecte d'eau selon la revendication 8, **caractérisé en ce que** l'insert (12) est incorporé et/ou intégré dans le fond (13) du corps de réservoir (11) de telle sorte qu'un côté supérieur de la rondelle annulaire (20) de l'insert (12) se termine approximativement en affleurement avec une surface côté intérieur (15) du fond (13) et/ou le collet extérieur (22) étagé et/ou situé plus profondément par rapport à la rondelle annulaire (20), entourant à l'extérieur la rondelle annulaire (20), est intégré dans le fond (13) du corps de réservoir (11) par le fait qu'il est recouvert par le plastique de la surface côté intérieur (15) du fond (13) du corps de réservoir (11).

13. Réservoir de collecte d'eau selon l'une quelconque des revendications précédentes, **caractérisé en ce qu'**un côté inférieur de l'ensemble de l'insert (12) est mouillé, couvert et/ou recouvert par le plastique d'une surface de fond située à l'extérieur (25) du fond (13) du corps de réservoir (11).

14. Réservoir de collecte d'eau selon la revendication 1, **caractérisé en ce que** la surface intérieure (18) est située à 0,5 mm à 2,0 mm ou à 1,0 mm à 1,5 mm en dessous de la rondelle annulaire (20).

15. Abreuvoir pour animaux pour de la volaille, par exemple des poules, des canards, des dindes, des poussins et similaires, comprenant au moins une soupape d'abreuvoir au niveau d'une conduite d'alimentation en eau, **caractérisé par** un réservoir de collecte d'eau (10 ; 26) associé à l'au moins une soupape d'abreuvoir, qui est réalisé selon l'une quelconque ou plusieurs des revendications 1 à 14.
